# EUROPEAN PATENT SPECIFICATION

(11) **EP 1 088 615 B1**
(45) Date of publication and mention of the grant of the patent: **29.12.2004**
(21) Application number: 00121429.5
(22) Date of filing: 29.09.2000
(51) Int. Cl.: B23K 35/26, C22C 13/00

(54) **Sn-Ag-Cu solder and surface treatment and parts mounting methods using the same**
Sn-Ag-Cu Lot und dessen Anwendung zur Oberfläschebehandlung und Bestückung von Bauteilen
Brasure Sn-Ag-Cu et méthodes de traitement de surface et de montage de pièces l'utilisant

(30) Priority: 29.09.1999 JP 27579799
(43) Date of publication of application: 04.04.2001
(73) Proprietor: NEC TOPPAN CIRCUIT SOLUTIONS, INC., Tokyo 104-0028 (JP); Solder Coat Co., Ltd., Nagoya-shi, Aichi (JP)
(72) Inventor: Ito, Toshihide, c/o NEC Toyama, Ltd., Shimoniikawa-gun, Toyama (JP); Hara, Shiro, c/o Solder Coat Co., Ltd., Nagoya-shi, Aichi (JP)
(74) Representative: von Samson-Himmelstjerna, Friedrich R., Dipl.-Phys.

(56) References cited:
- EP-A- 0 847 829
- WO-A-98/34755
- GB-A- 2 346 380
- US-A- 5 527 628
- PATENT ABSTRACTS OF JAPAN vol. 1999, no. 08, 30 June 1999 (1999-06-30) & JP 11 077366 A (FUJI ELECTRIC CO LTD), 23 March 1999 (1999-03-23)
- PATENT ABSTRACTS OF JAPAN vol. 1996, no. 12, 26 December 1996 (1996-12-26) & JP 08 215880 A (ISHIKAWA KINZOKU KK), 27 August 1996 (1996-08-27)

## Description

### BACKGROUND OF THE INVENTION

### 1. Field of the Invention

The present invention relates to a solder containing tin (Sn), silver (Ag) and copper (Cu) and surface treatment and parts mounting methods using the solder and more particularly, to a Sn-Ag-Cu solder that suppresses copper (Cu) of circuit layers of Printed Wiring Boards (PWBs) to dissolve into the molten solder in soldering processes, a method of surface-treating a PWB using the solder, and a method of mounting electronic parts or components on a PWB using the solder.

### 2. Description of the Related Art

To form the coating on the circuit layers of a PWB or the footprint thereof, or to mount electronic parts or components onto a PWB, conventionally, 63Sn-37Pb alloys that contain 63 weight % (wt%) of Sn and 37 wt% of Pb (lead) have been usually used as solder.

In recent years, environmental pollution due to Pb eluted from scrapped electronic equipment has become a matter of importance. Thus, vigorous research and development for solder without lead (i.e., lead (Pb)-free solder) has been made in the electronic equipment manufacturing industry. As typical Pb-free solders, various Sn-Cu, Sn-Ag-Cu, and Sn-Zn (zinc) alloys have been developed and disclosed so far. Addition of bismuth (Bi), indium (In), and/or germanium (Ge) to these alloys has been also studied.

Sn-Cu solder alloys have a disadvantage of a high melting point. With a 99.3Sn-0.7Cu alloy containing 99.3 wt% Sn and 0.7 wt% Cu that has a eutectic composition, the melting point is as high as 227 °C. Thus, there is a problem that PWBs and electronic parts or components mounted thereon are unable to withstand the heat applied during the soldering process, because typical PWBs have heat resistance against temperatures of approximately 260 °C or lower.

Sn-Zn solder alloys have an advantage of a proper melting point. With a 91Sn-9Sn alloy containing 91 wt% Sn and 9 wt% Zn that has a eutectic composition, the melting point is 199 °C, which is near the melting point (183 °C) of a 63Sn-37Pb alloy having a eutectic composition. Therefore, Sn-Zn solder alloys are preferred from the viewpoint of soldering temperatures. However, Sn-Zn solder alloys have a problem that they tend to be oxidized conspicuously because they contain an active element of Zn. As a result, they are unable to provide solder joints with desired quality or state.

On the other hand, Sn-Ag-Cu solder alloys have an acceptable melting point. With a 95. 8Sn-3. 5Ag-0.8Cu alloy containing 95.8 wt% of Sn, 3.5 wt% of Ag, and 0.8 wt% of Cu that has a ternary eutectic composition, the melting point is 217 °C. Although the melting point of 217 °C is higher than the melting point (183 °C) of a 63Sn-37Pb alloy, it is sufficiently low from the viewpoint of the heat resistance of PWBs. Also, when Sn-Ag-Cu solder alloys are used while the heat treatment temperature for forming the coating on the circuit layers of PWBs or the footprint thereof, or mounting electronic parts or components onto PWBs is set at 250 °C, a desired soldering quality or state as well as a desired mechanical characteristic can be realized.

Accordingly, it is seen that Sn-Ag-Cu solder alloys are most practical within the-above-identified Pb-free solder alloys. Thus, various techniques have ever been developed and disclosed to provide further improved Sn-Ag-Cu solder alloys.

For example, the Japanese Non-Examined Patent Publication No. 2-34295 published in 1990 discloses a "solder composition" that contains 92.5 to 96.9 wt% of Sn, 3 to 5 wt% of Cu, 0.1 to 2 wt% of Ni, and 0 to 0.5wt% of Ag. An object of this solder composition was to provide a Pb-free solder for piping.

The Japanese Non-Examined Patent Publication No. 2-179388 published in 1990 discloses a "low melting-point Ag solder" that contains 10 to 30 wt% of Ag, 70 to 90 wt% of Sn, 0.05 to 5 wt% of at least one of Cu, In, and Ga, and 0.05 to 1 wt% of at least one of Fe and Ni. An object of this solder was to improve its corrosion resistance and electrical and thermal conductivity.

The Japanese Non-Examined Patent Publication No. 4-333391 published in 1992 discloses a "Pb-alloy brazing material" that contains 0.5 to 10 wt% of Sn, 1 to 6 wt% of Ag, 0.01 to 0.5 wt% of Ni, and a balance of Pb and inevitable impurity. An object of this material was to improve its creep characteristic.

The Japanese Non-Examined Patent Publication No. 6-269983 published in 1994 discloses a "Ag solder" that contains 5 to 20 wt% of Ag, 70 to 90 wt% of Sn, 0.05 to 10 wt% of Cu, 0.05 to 2 wt% of palladium (Pd), and 0.05 to 1 wt% of at least one of Fe, Co, and Ni. An object of this solder was to improve its wettability on a Ni-system base metal.

The Japanese Non-Examined Patent Publication No. 11-77366 published in March 23, 1999, discloses a "solder alloy" that contains Sn as a main ingredient, 1.0 to 4.0 wt% of Ag, 2 wt% or less of Cu, and 10 wt% or less of Ni. An object of this solder alloy was to improve its thermal fatigue resistance and connectivity.

Generally, it has been known that a phenomenon termed "copper leaching" occurs when a Sn-Ag-Cu alloy is coated on the plated Cu circuit layer of a PWB by the hot-air leveling method. The "copper leaching" is a phenomenon that Cu contained in the circuit layer dissolves in the molten alloy thus coated and as a result, the thickness of the circuit layer decreases. In the worst case, the circuit layer is broken or cut due to the "copper leaching" phenomenon. This degrades the reliability of the PWB.

It has also been known that the "copper leaching" occurs when a Sn-Ag-Cu alloy is used as a solder for mounting electronic parts or components onto the Cu circuit layer of a PWB by the flow-soldering method. In this case, soldering defects tend to occur due to the "copper leaching", thereby degrading the reliability of the PWB.

Accordingly, to effectively prevent the "copper leaching" phenomenon, the Japanese Non-Examined Patent Publication No. 11-77368 published in March 23, 1999, discloses a "Pb-free solder alloy" that contains a Sn-Pb-Bi-In alloy as its main ingredient and 1 to 4 wt% of Cu. The Japanese Non-Examined Patent Publication No. 9-94688 published in 1997 discloses a "Pb-free solder alloy" that contains a Sn-Zn-Ni alloy as its main ingredient and 0.1 to 3 wt% of Cu.

The solder alloys disclosed in the above-identified Publication Nos. 11-77368 and 9-94688 have an object to prevent the "copper leaching" phenomenon by addition of Cu. However, the solder alloy disclosed in the Publication No. 11-77368 has a disadvantage that the melting point is excessively high because its solidus and liquidus temperatures are 208 °C and 342 °C, respectively. The solder alloy disclosed in the Publication No. 9-94688 has a disadvantage that it is easily oxidized. This is because the solder alloy is one of Sn-Zn alloys having the above-described easy oxidation property.

In addition, none of the above-described Publication Nos. 2-34295, 2-179388, 4-333391, and 6-269983 refers to the "copper leaching" phenomenon. Similar to the above-described Publication Nos. 11-77368 and 9-94688, the above-described Publication No. 11-77366 discloses the fact that the "copper leaching" phenomenon can be suppressed by addition of Cu. However, the Publication No. 11-77366 does not describe how much the addition of Cu suppresses the same phenomenon.

WO 9834755 discloses Sn-Ag-Cu solder alloys modified with Ni or Fe.

### SUMMARY OF THE INVENTION

Accordingly, an object of the present invention is to provide a Pb-free solder that has a satisfactory low melting point and that suppresses effectively the "copper leaching" phenomenon.

Another object of the present invention is to provide a Pb-free solder that is difficult to be oxidized and that has high wettability.

Still another object of the present invention is to provide a method of surface-treating a PWB that realizes a PWB with high reliability.

A further object of the present invention is to provide a method of mounting electronic parts or components on a PWB that forms highly reliable solder joints.

The above objects together with others not specifically mentioned will become clear to those skilled in the art from the following description.

The invention is defined in the accompanying set of claims.

With the Pb-free solder according to the invention, the "copper leaching" phenomenon can be effectively suppressed due to existence of Ni and/or Fe within the specific amount range. Also, since the amount of the Ni and/or Fe is very small, the solder according to the first aspect of the invention has a composition similar to the eutectic composition of Sn-Ag-Cu solders without Ni and Fe. Thus, the solder has a low liquidus temperature (i.e., a low melting point).

Moreover, the solder according to the invention is one of the Sn-Ag-Cu solders and therefore, it is difficult to be oxidized and satisfactory in wettability.

Preferably, the solder according to the invention has a copper dissolution rate of 0.15 µm or less (or 0.20 µm or less). This is to ensure the suppression of the "copper leaching" phenomenon.

Preferably, the solder according to the first aspect of the invention has a liquidus temperature of 240 °C or lower. More preferably, the liquidus temperature is 230 °C or lower. This is to ensure a satisfactory low melting point.

With the method of surface-treating a PWD according to the second aspect of the invention, the solder can be selectively coated onto the Cu circuit layer of the PWB with high reliability.

With the method of mounting electronic parts or components on a PWD according to the invention, the electronic parts or components can be mounted (i.e., mechanically supported and electrically connected) on the Cu circuit layer of the PWB with highly reliable solder joints.

### BRIEF DESCRIPTION OF THE DRAWINGS

In order that the present invention may be readily carried into effect, it will now be described with reference to the accompanying drawings.
Fig. 1 is a graph showing the relationship between the content of the elements or ingredients of Sn-Ag-Cu solders and the copper dissolution rate thereof.
Figs. 2A to 2E are graphs showing the result of experiments of the sample solders in Tables 11 to 15 under the condition that the Cu content is changed from 0.2 to 1.6 wt% and the Ni content is changed from 0 to 0.1 wt% while the Ag content is fixed at 0.5, 1, 3.5, 4, or 5 wt%, respectively.
Figs. 3A to 3E are graphs showing the result of experiments of the sample solders in Tables 11 to 15 under the condition that the Ag content is changed from 0.2 to 1.6 wt% and the Ni content is changed from 0 to 0.1 wt% while the Cu content is fixed at 0.2, 0.4, 0.8, 1.2, and 1.6 wt%, respectively.
Figs. 4A to 4E are graphs showing the result of experiments of the sample solders in Tables 11 to 15 under the condition that the Cu content is changed from 0.2 to 1.6 wt% and the Fe content is changed from 0 to 0.1 wt% while the Ag content is fixed at 0.5, 1, 3.5, 4, and 5 wt%, respectively.
Figs. 5A to 5E are graphs showing the result of experiments of the sample solders in Tables 11 to 15 under the condition that the Ag content is changed from 0.2 to 1.6 wt% and the Fe content is changed from 0 to 0.1 wt% while the Cu content is fixed at 0.2, 0.4, 0.8, 1.2, and 1.6 wt%, respectively.
Fig. 6 is a graph showing the relationship between the liquidus temperature and the Ni content in the Sn-Ag-Cu solder that contains 3.5 wt% of Ag and 0.8 wt% of Cu.
Fig. 7 is a graph showing the relationship between the liquidus temperature and the Ni content in the Sn-Ag-Cu solder that contains 3.5 wt% of Ag, 0.8 wt% of Cu, and 0.02 wt% of Fe.
Fig. 8 is a graph showing the relationship between the copper dissolution rate and the Ni or Fe content in the Sn-Ag-Cu solder that contains 3.5 wt% of Ag and 0.8 wt% of Cu, and the relationship between the copper dissolution rate and the Ni content in the Sn-Ag-Cu solder that contains 3.5 wt% of Ag, 0.8 wt% of Cu, and 0.02 wt% of Fe.
Fig. 9 is a graph showing the relationship between the copper dissolution rate and the Ag content in the Sn-Ag-Cu solder when the Ni content is changed from 0 to 0.1 wt% and the Cu content if fixed at 0.8 wt%.
Fig. 10 is a graph showing the relationship between the copper dissolution rate and the Cu content in the Sn-Ag-Cu solder when the Ni content is changed from 0 to 0.1 wt% and the Ag content is fixed at 3.5 wt%.
Fig. 11 is a graph showing the relationship between the liquidus temperature and the Ag content in the Sn-Ag-Cu solder when the Ni content is changed from 0 to 0.1 wt% and the Cu content is fixed at 0.8 wt%.
Fig. 12 is a graph showing the relationship between the liquidus temperature and the Cu content in the Sn-Ag-Cu solder when the Ni content is changed from 0 to 0.1 wt% and the Ag content is fixed at 3.5 wt%.

### DETAILED DESCRIPTION OF THE INVENTION

To accomplish the above-described objects, the inventors conducted experiment and research vigorously and as a result, they found the fact that the "copper leaching" phenomenon can be effectively suppressed if proper amount of Ni and/or Fe is/are added to a Sn-Ag-Cu solder alloy. Through the fact thus found, they created the present invention.

The solder according to the invention is explained in detail below.

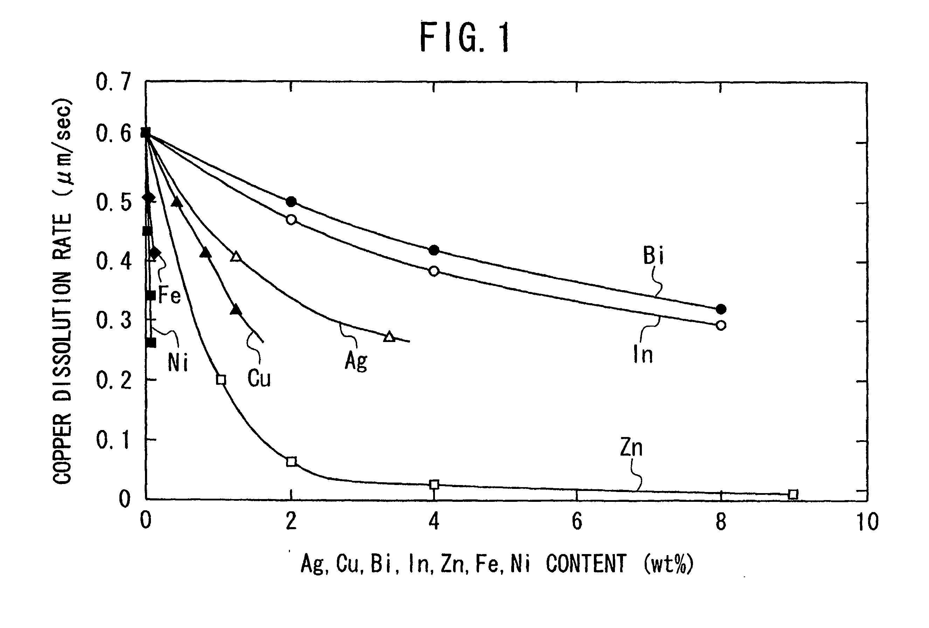

Fig. 1 and the following Table 1 express the copper dissolution rate (µm/sec) obtained under the condition that specific elements Ag, Cu, Bi, In, Zn, Fe, or Ni were added to Sn as its main ingredient. From Fig. 1 and Table 1, it is seen that the higher the copper dissolution rate is, the more easily the "copper leaching" phenomenon progresses.

**TABLE 1**

| COMPOSITION ( wt% ) | | | | | | | | COPPER DISSOLUTION RATE ( µm/sec ) |
|---|---|---|---|---|---|---|---|---|
| Sn | Ag | Cu | Bi | In | Zn | Fe | Ni | |
| 100 | 0 | 0 | 0 | 0 | 0 | 0 | 0 | 0.61 |
| 98.8 | 1.2 | 0 | 0 | 0 | 0 | 0 | 0 | 0.41 |
| 96.5 | 3.5 | 0 | 0 | 0 | 0 | 0 | 0 | 0.27 |
| 99.6 | 0 | 0.4 | 0 | 0 | 0 | 0 | 0 | 0.43 |
| 99.2 | 0 | 0.8 | 0 | 0 | 0 | 0 | 0 | 0.29 |
| 98.8 | 0 | 1.2 | 0 | 0 | 0 | 0 | 0 | 0.17 |
| 98 | 0 | 0 | 2 | 0 | 0 | 0 | 0 | 0.50 |
| 96 | 0 | 0 | 4 | 0 | 0 | 0 | 0 | 0.42 |
| 92 | 0 | 0 | 8 | 0 | 0 | 0 | 0 | 0.32 |
| 98 | 0 | 0 | 0 | 2 | 0 | 0 | 0 | 0.47 |
| 96 | 0 | 0 | 0 | 4 | 0 | 0 | 0 | 0.38 |
| 92 | 0 | 0 | 0 | 8 | 0 | 0 | 0 | 0.29 |
| 99 | 0 | 0 | 0 | 0 | 1 | 0 | 0 | 0.20 |
| 98 | 0 | 0 | 0 | 0 | 2 | 0 | 0 | 0.06 |
| 96 | 0 | 0 | 0 | 0 | 4 | 0 | 0 | 0.02 |
| 91 | 0 | 0 | 0 | 0 | 9 | 0 | 0 | 0.01 |
| 99.98 | 0 | 0 | 0 | 0 | 0 | 0.02 | 0 | 0.52 |
| 99.96 | 0 | 0 | 0 | 0 | 0 | 0.04 | 0 | 0.46 |
| 99.94 | 0 | 0 | 0 | 0 | 0 | 0.06 | 0 | 0.41 |
| 99.98 | 0 | 0 | 0 | 0 | 0 | 0 | 0.02 | 0.45 |
| 99.96 | 0 | 0 | 0 | 0 | 0 | 0 | 0.04 | 0.35 |
| 99.94 | 0 | 0 | 0 | 0 | 0 | 0 | 0.06 | 0.26 |

As seen from Fig. 1 and Table 1, the copper dissolution rate is conspicuously decreased by addition of a trace of of Ni or Fe while the decrease in the copper dissolution rate is relatively small when other elements than Ni and Fe are added. Generally, the liquidus temperature decreases with the increasing amount of the added element or elements to an alloy with the eutectic composition. Thus, it can be said that the "copper leaching" phenomenon can be effectively suppressed by addition of Ni and/or Fe while the liquidus temperature is suppressed to rise.

The reason of selection of the elements Ag, Cu, Ni and Fe to be added and the reason of limitation of their amounts are explained below.;

### (Ag: 1.0 to 4.0 wt%)

Ag is an element having a function of enhancing or improving the wettability of the solder. In other words, the wetting time can be shortened by addition of Ag.

The following Table 2 shows the result of a test that measures the wettability of Sn-Ag-Cu solders according to the wetting balance method specified in the section 8.3.1.2 of JIS (Japan Industrial Standard) Z 3197. For this test, phosphorus-deoxidized copper plates (thickness: 0.3 mm, width: 5 mm, length: 50 mm) were heated for 20 minutes at 130 °C, thereby oxidizing the plates. The copper plates thus oxidized were used as samples.

A flux for this test was produced in the following way. Specifically, 25 mg of rosin was dissolved in isopropyl alcohol and then, 0.39 ± 0.01 g of diethyl amine hydrochloride was added thereto.

The temperature of a soldering bath was set at 250 °C, the dipping speed of the samples into the bath was set at 16 mm/sec, the dipping depth was set at 2mm, and the dipping period was set at 10 seconds.

**TABLE 2**

| COMPOSITION ( wt% ) | | | SOLIDUS TEMPERATURE ( °C ) | LIQUIDUS TEMPERATURE ( °C ) | COPPER DISSOLUTION RATE ( µm/sec ) | WETTING TIME ( sec ) |
|---|---|---|---|---|---|---|
| Sn | Ag | Cu | | | | |
| 100 | 0 | 0 | 232 | 232 | 0.61 | 5.42 |
| 99.6 | 0 | 0.4 | 227 | 230 | 0.43 | 2.37 |
| 99.2 | 0 | 0.8 | 227 | 227 | 0.29 | 2.2 |
| 98.8 | 0 | 1.2 | 227 | 244 | 0.17 | 2.22 |
| 98.4 | 0 | 1.6 | 227 | 259 | 0.04 | 2.96 |
| 98.8 | 1.2 | 0 | 221 | 228 | 0.41 | 1.4 |
| 98.4 | 1.2 | 0.4 | 217 | 226 | 0.30 | 1.55 |
| 98 | 1.2 | 0.8 | 217 | 224 | 0.19 | 1.49 |
| 97.6 | 1.2 | 1.2 | 217 | 237 | 0.13 | 1.73 |
| 97.2 | 1.2 | 1.6 | 217 | 253 | 0.07 | 3.48 |
| 96.5 | 3.5 | 0 | 221 | 221 | 0.27 | 1.43 |
| 96.1 | 3.5 | 0.4 | 217 | 219 | 0.18 | 1.24 |
| 95.7 | 3.5 | 0.8 | 217 | 217 | 0.13 | 1.16 |
| 95.3 | 3.5 | 1.2 | 217 | 226 | 0.08 | 1.41 |
| 94.9 | 3.5 | 1.6 | 217 | 242 | 0.04 | 2.97 |

As seen from Table 2, the Sn-Cu alloys without Ag have the wetting time greater than two seconds. Unlike this, almost all the Sn-Cu alloys with Ag have the wetting time less than two seconds. In particular, the alloy containing 3.5 wt% of Ag and 0.8 wt% of Cu has a minimum wetting time of 1.16 second and a copper dissolution rate of 0.13 µm/sec.

With the Sn-Ag-Cu alloy to which Ne and/or Fe is/are added according to the invention, when the Ag content is less than 1.0 wt%, the effect to shorten the wetting time is insufficient. On the other hand, when the Ag content is greater than 4.0 wt%, the liquidus temperature is excessively high, causing the danger that some defect occurs in the PWB and/or electronic components during the soldering process. As a result, the preferred content of Ag is 1.0 to 4.0 wt% in the solder of the present invention, the reason of which is explained later.

### (Cu: 0.4 to 1.3 wt%)

Cu is an element having a function of suppressing the "copper leaching" phenomenon of the Cu circuit layers of the PWB.

Table 3 shown below shows the result of tests that measure the solidus and liquidus temperatures and the copper dissolution rate of Sn-Pb solders with the eutectic composition according to JIS H63A. The tests were conducted to find the preferred content range of Cu.

**TABLE 3**

| COPPER CONTENT ( wt% ) | SOLIDUS TEMPERATURE ( °C ) | LIQUIDUS TEMPERATURE ( °C ) | COPPER DISSOLUTION RATE ( µm/sec ) |
|---|---|---|---|
| 0 | 183 | 183 | 0.10 |
| 0.1 | 183 | 183 | 0.08 |
| 0.2 | 183 | 198 | 0.07 |
| 0.3 | 183 | 218 | 0.05 |
| 0.4 | 183 | 236 | 0.04 |
| 0.5 | 183 | 250 | 0.02 |

As seen from Table 3, the copper dissolution rate decreases with the increasing amount of Cu added, which means that the "copper leaching" phenomenon can be suppressed by addition of Cu. It is also found that the liquidus temperature rises as the amount of Cu is increased.

From the viewpoint of the tendency from Table 3, with the solder according to the invention, in which Ni and/or Fe is/are added to an Sn-Ag-Cu alloy, the effect to suppress the "copper leaching" phenomenon is insufficient when the Cu content is less than 0.4 wt%. On the other hand, when the Cu content is greater than 1.3 wt%, the liquidus temperature is excessively high, causing the possibility that defects tend to occur in the PWB and/or electronic components mounted thereon in the soldering process. Accordingly, it is preferred that the Cu content is in the range from 0.4 wt% to 1.3 wt%, the reason of which is explained later.

Additionally, Tables 4 and 5 show the relationship between the Ag and Cu contents and the liquidus temperature and the copper dissolution rate of Sn-Ag-Cu solders, respectively. In Tables 4 and 5, the balance of the composition is Sn.

**TABLE 4**

| COPPER DISSOLUTION RATE ( µm/sec ) | | Cu CONTENT ( wt% ) | | | | | | |
|---|---|---|---|---|---|---|---|---|
| | | 0 | 0.2 | 0.4 | 0.8 | 1 | 1.2 | 1.6 |
| Ag CONTENT ( wt% ) | 0 | 232 | 230 | 229 | 227 | 235 | 244 | 259 |
| | 0.5 | 231 | 230 | 228 | 226 | 233 | 241 | 257 |
| | 1 | 229 | 228 | 227 | 225 | 231 | 238 | 254 |
| | 2 | 226 | 225 | 224 | 222 | 227 | 233 | 249 |
| | 3 | 222 | 222 | 221 | 219 | 224 | 228 | 244 |
| | 3.5 | 221 | 220 | 219 | 217 | 222 | 226 | 242 |
| | 4 | 228 | 227 | 226 | 224 | 229 | 233 | 249 |
| | 5 | 240 | 239 | 238 | 236 | 241 | 245 | 261 |

**TABLE 5**

| COPPER DISSOLUTION RATE ( µm/sec ) | | Cu CONTENT ( wt% ) | | | | | | |
|---|---|---|---|---|---|---|---|---|
| | | 0 | 0.2 | 0.4 | 0.8 | 1 | 1.2 | 1.6 |
| Ag CONTENT ( wt% ) | 0 | 0.610 | 0.520 | 0.430 | 0.290 | 0.230 | 0.170 | 0.100 |
| | 0.5 | 0.510 | 0.440 | 0.370 | 0.240 | 0.195 | 0.150 | 0.085 |
| | 1 | 0.435 | 0.380 | 0.320 | 0.200 | 0.170 | 0.135 | 0.075 |
| | 2 | 0.340 | 0.290 | 0.240 | 0.160 | 0.140 | 0.110 | 0.060 |
| | 3 | 0.290 | 0.240 | 0.190 | 0.140 | 0.120 | 0.090 | 0.045 |
| | 3.5 | 0.270 | 0.220 | 0.180 | 0.130 | 0.110 | 0.080 | 0.040 |
| | 4 | 0.260 | 0.210 | 0.170 | 0.120 | 0.100 | 0.080 | 0.035 |
| | 5 | 0.250 | 0.200 | 0.160 | 0.110 | 0.090 | 0.070 | 0.030 |

It is found from Table 4 that the liquidus temperature is minimized when the Ag content is 3.5 wt% and the Cu content is 0.8 wt% and that the liquidus temperature rises if the Ag content is increased or decreased from 3.5 wt% and the Cu content is increased or decreased from 0.8 wt%. As described above with reference to Table 2, the alloy containing 3.5 wt% of Ag and 0.8 wt% of Cu has a minimum wetting time of 1.16 second and a copper dissolution rate of 0.13 µm/sec.

Also, it is found from Table 4 that the liquidus temperature is relatively lower when the Cu content is in the range from 0.4 wt% to 1.2 wt%. The liquidus temperature is relatively lower when the Ag content is in the range from 1 wt% to 4 wt%.

On the other hand, it is found from Table 5 that the copper dissolution rate increases as the Cu and Ag contents are increased.

### (Ni: 0.02 to 0.06 wt%)

As described previously, Ni is an element having a function of suppressing the "copper leaching" phenomenon of the Cu circuit layers of the PWB. This function becomes distinctive by addition of a trace of Ni.

With the Sn-Ag-Cu alloy to which Ni is added according to the invention, when the Ni content is less than 0.02 wt%, the effect to suppress the "copper leaching" phenomenon is insufficient. On the other hand, when the Ni content is greater than 0.06 wt%, the liquidus temperature is excessively high, causing a danger that some defect occurs in the PWB and/or electronic components. As a result, the preferred content of Ni is 0.02 to 0.06 wt%, in which the liquidus temperature is set at 240 °C or lower. It is found that the more preferred content of Ni is 0.02 to 0.04 wt%, in which the liquidus temperature is set at 230 °C or lower.

### (Fe: 0.02 to 0.06 wt%)

As described previously, like Ni, Fe is an element having a function of suppressing the "copper leaching" phenomenon of the Cu circuit layers of the PWB. This function becomes distinctive by addition of a trace of Fe.

With the Sn-Ag-Cu alloy to which Fe is added according to the invention, when the Fe content is less than 0.02 wt%, the effect to suppress the "copper leaching" phenomenon is insufficient. On the other hand, the rise of the liquidus temperature due to the addition of Fe is relatively smaller than that caused by the addition of Ni. In particular, when the Fe content is less than 0.1 wt%, the liquidus temperature scarcely changes due to the addition of Fe. However, if the Fe content is greater than 0.06 or 0.05 wt%, the viscosity is excessively high, causing the following problems.

The first problem is that the thickness of the coated solder on the copper circuit layers of the PWB is not uniform when the solder is coated by the hot-air leveling method. Moreover, there is a possibility that the circuit layers are not partially coated by the solder and that unwanted solder bridges are formed between the adjoining circuit lines.

The second problem is that the soldering yield lowers in the flow-soldering process because of instable flow of the solder and that the connection reliability of the solder joints degrades due to solder amount fluctuation in the joints.

As a result, it is found that the preferred range of the Fe content is 0.02 to 0.06 wt%. From the viewpoint of the viscosity, the more preferred range of the Fe content is 0.02 to 0.05 wt%.

### (Ni: 0.02 to 0.06 or 0.04 wt%, Fe: 0.02 to 0.06 or 0.05 wt%)

If Fe is further added to the Sn-Ag-Cu alloy along with Ni, there is an additional advantage that the copper dissolution rate can be further lowered compared with that of the solder to which only one of Ni and Fe is added. In this case, the liquidus temperature is approximately the same as that of the solder to which only Ni is added. Thus, when both Ni and Fe are added, the preferred range of the Ni content is 0.02 to 0.06 wt% or 0.02 to 0.04 wt% and at the same time, the preferred range of the Fe content is 0.02 to 0.06 wt% or 0.02 to 0.05 wt%.

### EXAMPLES

To explain the present invention in more detail, preferred examples of the invention are shown below along with compared examples.

First, sample solders having the composition specified in the following Tables 6 to 10 were produced, in which the balance of the composition of each solder was Sn and inevitable impurity. The sample solders thus produced were respectively termed the sample Nos. 1 to 105, respectively.

**TABLE 6**

| SAMPLE NO. | COMPOSITION ( wt% ) | | | |
|---|---|---|---|---|
| | Ag | Cu | Ni | Fe |
| 1 | 3.5 | 0.8 | 0 | 0 |
| 2 | 3.5 | 0.8 | 0.02 | 0 |
| 3 | 3.5 | 0.8 | 0.04 | 0 |
| 4 | 3.5 | 0.8 | 0.06 | 0 |
| 5 | 3.5 | 0.8 | 0.08 | 0 |
| 6 | 3.5 | 0.8 | 0.1 | 0 |
| 7 | 3.5 | 0.8 | 0 | 0.02 |
| 8 | 3.5 | 0.8 | 0 | 0.04 |
| 9 | 3.5 | 0.8 | 0 | 0.06 |
| 10 | 3.5 | 0.8 | 0 | 0.08 |
| 11 | 3.5 | 0.8 | 0 | 0.1 |
| 12 | 3.5 | 0.8 | 0.02 | 0.02 |
| 13 | 3.5 | 0.8 | 0.04 | 0.02 |
| 14 | 3.5 | 0.8 | 0.05 | 0.02 |
| 15 | 3.5 | 0.8 | 0.06 | 0.02 |
| 16 | 3.5 | 0.8 | 0.08 | 0.02 |
| 17 | 3.5 | 0.8 | 0.1 | 0.02 |

**TABLE 7**

| SAMPLE NO. | COMPOSITION ( wt% ) | | | |
|---|---|---|---|---|
| | Ag | Cu | Ni | Fe |
| 18 | 3.5 | 0.2 | 0 | 0 |
| 19 | 3.5 | 0.2 | 0.02 | 0 |
| 20 | 3.5 | 0.2 | 0.04 | 0 |
| 21 | 3.5 | 0.2 | 0.06 | 0 |
| 22 | 3.5 | 0.2 | 0.08 | 0 |
| 23 | 3.5 | 0.2 | 0.1 | 0 |
| 24 | 3.5 | 0.2 | 0 | 0.02 |
| 25 | 3.5 | 0.2 | 0 | 0.04 |
| 26 | 3.5 | 0.2 | 0 | 0.06 |
| 27 | 3.5 | 0.2 | 0 | 0.08 |
| 28 | 3.5 | 0.2 | 0 | 0.1 |
| 29 | 3.5 | 0.4 | 0 | 0 |
| 30 | 3.5 | 0.4 | 0.02 | 0 |
| 31 | 3.5 | 0.4 | 0.04 | 0 |
| 32 | 3.5 | 0.4 | 0.06 | 0 |
| 33 | 3.5 | 0.4 | 0.08 | 0 |
| 34 | 3.5 | 0.4 | 0.1 | 0 |
| 35 | 3.5 | 0.4 | 0 | 0.02 |
| 36 | 3.5 | 0.4 | 0 | 0.04 |
| 37 | 3.5 | 0.4 | 0 | 0.06 |
| 38 | 3.5 | 0.4 | 0 | 0.08 |
| 39 | 3.5 | 0.4 | 0 | 0.1 |

**TABLE 8**

| SAMPLE NO. | COMPOSITION ( wt% ) | | | |
|---|---|---|---|---|
| | Ag | Cu | Ni | Fe |
| 40 | 3.5 | 1.2 | 0 | 0 |
| 41 | 3.5 | 1.2 | 0.02 | 0 |
| 42 | 3.5 | 1.2 | 0.04 | 0 |
| 43 | 3.5 | 1.2 | 0.06 | 0 |
| 44 | 3.5 | 1.2 | 0.08 | 0 |
| 45 | 3.5 | 1.2 | 0.1 | 0 |
| 46 | 3.5 | 1.2 | 0 | 0.02 |
| 47 | 3.5 | 1.2 | 0 | 0.04 |
| 48 | 3.5 | 1.2 | 0 | 0.06 |
| 49 | 3.5 | 1.2 | 0 | 0.08 |
| 50 | 3.5 | 1.2 | 0 | 0.1 |
| 51 | 3.5 | 1.6 | 0 | 0 |
| 52 | 3.5 | 1.6 | 0.02 | 0 |
| 53 | 3.5 | 1.6 | 0.04 | 0 |
| 54 | 3.5 | 1.6 | 0.06 | 0 |
| 55 | 3.5 | 1.6 | 0.08 | 0 |
| 56 | 3.5 | 1.6 | 0.1 | 0 |
| 57 | 3.5 | 1.6 | 0 | 0.02 |
| 58 | 3.5 | 1.6 | 0 | 0.04 |
| 59 | 3.5 | 1.6 | 0 | 0.06 |
| 60 | 3.5 | 1.6 | 0 | 0.08 |
| 61 | 3.5 | 1.6 | 0 | 0.1 |

**TABLE 9**

| SAMPLE NO. | COMPOSITION ( wt% ) | | | |
|---|---|---|---|---|
| | Ag | Cu | Ni | Fe |
| 62 | 0.5 | 0.8 | 0 | 0 |
| 63 | 0.5 | 0.8 | 0.02 | 0 |
| 64 | 0.5 | 0.8 | 0.04 | 0 |
| 65 | 0.5 | 0.8 | 0.06 | 0 |
| 66 | 0.5 | 0.8 | 0.08 | 0 |
| 67 | 0.5 | 0.8 | 0.1 | 0 |
| 68 | 0.5 | 0.8 | 0 | 0.02 |
| 69 | 0.5 | 0.8 | 0 | 0.04 |
| 70 | 0.5 | 0.8 | 0 | 0.06 |
| 71 | 0.5 | 0.8 | 0 | 0.08 |
| 72 | 0.5 | 0.8 | 0 | 0.1 |
| 73 | 1 | 0.8 | 0 | 0 |
| 74 | 1 | 0.8 | 0.02 | 0 |
| 75 | 1 | 0.8 | 0.04 | 0 |
| 76 | 1 | 0.8 | 0.06 | 0 |
| 77 | 1 | 0.8 | 0.08 | 0 |
| 78 | 1 | 0.8 | 0.1 | 0 |
| 79 | 1 | 0.8 | 0 | 0.02 |
| 80 | 1 | 0.8 | 0 | 0.04 |
| 81 | 1 | 0.8 | 0 | 0.06 |
| 82 | 1 | 0.8 | 0 | 0.08 |
| 83 | 1 | 0.8 | 0 | 0.1 |

**TABLE 10**

| SAMPLE NO. | COMPOSITION ( wt% ) | | | |
|---|---|---|---|---|
| | Ag | Cu | Ni | Fe |
| 84 | 4 | 0.8 | 0 | 0 |
| 85 | 4 | 0.8 | 0.02 | 0 |
| 86 | 4 | 0.8 | 0.04 | 0 |
| 87 | 4 | 0.8 | 0.06 | 0 |
| 88 | 4 | 0.8 | 0.08 | 0 |
| 89 | 4 | 0.8 | 0.1 | 0 |
| 90 | 4 | 0.8 | 0 | 0.02 |
| 91 | 4 | 0.8 | 0 | 0.04 |
| 92 | 4 | 0.8 | 0 | 0.06 |
| 93 | 4 | 0.8 | 0 | 0.08 |
| 94 | 4 | 0.8 | 0 | 0.1 |
| 95 | 5 | 0.8 | 0 | 0 |
| 96 | 5 | 0.8 | 0.02 | 0 |
| 97 | 5 | 0.8 | 0.04 | 0 |
| 98 | 5 | 0.8 | 0.06 | 0 |
| 99 | 5 | 0.8 | 0.08 | 0 |
| 100 | 5 | 0.8 | 0.1 | 0 |
| 101 | 5 | 0.8 | 0 | 0.02 |
| 102 | 5 | 0.8 | 0 | 0.04 |
| 103 | 5 | 0.8 | 0 | 0.06 |
| 104 | 5 | 0.8 | 0 | 0.08 |
| 105 | 5 | 0.8 | 0 | 0.1 |

Next, the copper dissolution rate, the melting temperature, the viscosity, and the spreading rate (i.e., wettability) were measured in the following way.

In the measurement of the copper dissolution rate, a solution of isopropyl alcohol that contains 20 wt% of rosin was used as a flux. The solution was coated on copper wires having a diameter of 0.5 mm and then, the copper wires thus coated were immersed in a solder bath for a specific period. Thereafter, the radius reduction of the wires was measured.

In the measurement of the melting temperature, the solidus temperature was measured by the "differential thermal analysis" method. Also, each sample solder was melted and stored in a measurement cup. Then, while the viscosity of the sample solder thus melted was measured by using a "VISCOTESTER VT-04" (produced by RION CO. LTD.), the solder was gradually cooled in such a way that the temperature of the solder was lowered from the temperature of approximately 310 °C toward room temperature. The temperature at which the viscosity of the solder suddenly rises was found during the cooling process. The temperature at which the viscosity of the solder suddenly rises was defined as the liquidus temperature. Therefore, the viscosity of the sample solders was measured during the measurement of the melting temperature.

In the measurement of the spreading rate (i.e., wettability), according to the method of the "spreading rate test" specified in the section 8.3.1.1 of JIS Z 3197 (which defines the testing method of soldering fluxes). Specifically, 0.3 g of each solder with a flux was placed on an oxidized copper plate and then, it was heated for 30 seconds at 250 °C, thereby spreading the solder on the plate. Thereafter, the solder was cooled to solidify the same. The height of the solidified solder was measured and the spreading rate thereof was calculated from the height thus measured.

The results of the above-described measurement are listed in the following Tables 11 to 15, in which the evaluation result is added to each sample with the symbols "O", "Δ", and "×". These symbols were added according to the standard explained below.

If the liquidus temperature was equal to or less than 230 °C, the symbol "○" was added. If it was greater than 230 °C and equal to or less than 240 °C, the symbol "Δ" was added. If it was greater than 240 °C, the symbol "×" was added.

If the copper dissolution rate was less than 0.15 µm/sec, the symbol "○" was added. If it was in the range from 0.15 µm/sec to 0.20 µm/sec, the symbol "Δ" was added. If it was higher than 0.20 µm/sec, the symbol "×" was added.

If the viscosity was equal to or less than 2.5 cP, the symbol "○" was added. If it was higher than 2.5 cP, the symbol "×" was added.

If the spreading rate was equal to or higher than 75 %, the symbol "○" was added. If it was lower than 75 %, the symbol "×" was added.

If any one of the measurement results included the symbol "×", the total evaluation result was defined as "×". If any one of the measurement results included the symbol "Δ" while none of the measurement results included the symbol " × ", the total evaluation result was defined as "Δ". If none of the measurement results included the symbols "×" and "Δ", in other words, all the measurement results included the symbol "○", the total evaluation result was defined as "O".

In addition, if the sample included the symbol "×" about the liquidus temperature, the total evaluation result was defined as "×" without measurements about the viscosity and the spreading rate. Thus, some of the samples include no data or results in Tables 11 to 15.

**TABLE 11**

| SAMPLE NO. | SOLIDUS TEMP. ( °C ) | LIQUIDUS TEMP. ( °C ) | | COPPER DISSOLUTION RATE ( µm/sec ) | | VISCOSITY ( cP ) | | SPREADING RATE ( % ) | | TOTAL EVALUATION |
|---|---|---|---|---|---|---|---|---|---|---|
| 1 | 217 | 217 | ○ | 0.15 | Δ | 1.7 | ○ | 77.9 | ○ | Δ |
| 2 | 217 | 217 | ○ | 0.1 | ○ | 1.8 | ○ | 76.9 | ○ | ○ |
| 3 | 217 | 217 | ○ | 0.07 | ○ | 1.7 | ○ | 77 | ○ | ○ |
| 4 | 217 | 230 | ○ | 0.05 | ○ | 1.7 | ○ | 77.2 | ○ | ○ |
| 5 | 217 | 250 | × | 0.03 | ○ | | | | | × |
| 6 | 217 | 265 | × | 0.02 | ○ | | | | | × |
| 7 | 217 | 217 | ○ | 0.14 | ○ | 2.1 | ○ | 77.7 | ○ | ○ |
| 8 | 217 | 217 | ○ | 0.13 | ○ | 2.3 | ○ | 77.9 | ○ | ○ |
| 9 | 217 | 217 | ○ | 0.12 | ○ | 2.5 | ○ | 78 | ○ | ○ |
| 10 | 217 | 217 | ○ | 0.11 | ○ | 2.8 | × | 78.4 | ○ | × |
| 11 | 217 | 217 | ○ | 0.1 | ○ | 3.1 | × | 78.5 | ○ | × |
| 12 | 217 | 217 | ○ | 0.08 | ○ | 2.1 | ○ | 77.7 | ○ | ○ |
| 13 | 217 | 217 | ○ | 0.05 | ○ | 2.1 | ○ | 77.9 | ○ | ○ |
| 14 | 217 | 217 | ○ | 0.04 | ○ | 2.1 | ○ | 77.8 | ○ | ○ |
| 15 | 217 | 233 | Δ | 0.03 | ○ | 2.2 | ○ | 77.5 | ○ | Δ |
| 16 | 217 | 255 | × | 0.02 | ○ | | | | | × |
| 17 | 217 | 268 | × | 0.01 | ○ | | | | | × |

**TABLE 12**

| SAMPLE NO. | SOLIDUS TEMP. ( °C ) | LIQUIDUS TEMP. ( °C ) | | COPPER DISSOLUTION RATE ( µm/sec ) | | VISCOSITY ( cP ) | | SPREADING RATE ( % ) | | TOTAL EVALUATION |
|---|---|---|---|---|---|---|---|---|---|---|
| 18 | 217 | 220 | ○ | 0.22 | × | 1.8 | ○ | 78.2 | ○ | × |
| 19 | 217 | 220 | ○ | 0.15 | Δ | 1.7 | ○ | 78.1 | ○ | Δ |
| 20 | 217 | 220 | ○ | 0.1 | ○ | 1.7 | ○ | 77.8 | ○ | ○ |
| 21 | 217 | 233 | Δ | 0.07 | ○ | 1.8 | ○ | 78.2 | ○ | Δ |
| 22 | 217 | 253 | × | 0.04 | ○ | | | | | × |
| 23 | 217 | 268 | × | 0.03 | ○ | | | | | × |
| 24 | 217 | 220 | ○ | 0.2 | Δ | 2.2 | ○ | 78.2 | ○ | Δ |
| 25 | 217 | 220 | ○ | 0.19 | Δ | 2.4 | ○ | 78.4 | ○ | Δ |
| 26 | 217 | 220 | ○ | 0.18 | Δ | 2.5 | ○ | 78.1 | ○ | Δ |
| 27 | 217 | 220 | ○ | 0.16 | Δ | 2.9 | × | 78.6 | ○ | × |
| 28 | 217 | 220 | ○ | 0.15 | Δ | 3.2 | × | 78.5 | ○ | × |
| 29 | 217 | 219 | ○ | 0.18 | Δ | 1.7 | ○ | 77.8 | ○ | Δ |
| 30 | 217 | 219 | ○ | 0.12 | ○ | 1.7 | ○ | 77.4 | ○ | ○ |
| 31 | 217 | 219 | ○ | 0.08 | ○ | 1.7 | ○ | 77.8 | ○ | ○ |
| 32 | 217 | 232 | Δ | 0.05 | ○ | 1.7 | ○ | 78.5 | ○ | Δ |
| 33 | 217 | 252 | × | 0.03 | ○ | | | | | × |
| 34 | 217 | 267 | ○ | 0.02 | ○ | | | | | × |
| 35 | 217 | 219 | ○ | 0.17 | Δ | 2.1 | ○ | 77.9 | ○ | Δ |
| 36 | 217 | 219 | ○ | 0.16 | Δ | 2.2 | ○ | 77.9 | ○ | Δ |
| 37 | 217 | 219 | ○ | 0.14 | ○ | 2.4 | ○ | 78.4 | ○ | ○ |
| 38 | 217 | 219 | ○ | 0.13 | ○ | 2.6 | × | 78.3 | ○ | × |
| 39 | 217 | 219 | ○ | 0.12 | ○ | 3 | × | 78.2 | ○ | × |

**TABLE 13**

| SAMPLE NO. | SOLIDUS TEMP . ( °C ) | LIQUIDUS TEMP. ( °C ) | | COPPER DISSOLUTION RATE ( µm/sec ) | | VISCOSITY ( cP ) | | SPREADING RATE ( % ) | | TOTAL EVALUATION |
|---|---|---|---|---|---|---|---|---|---|---|
| 40 | 217 | 226 | ○ | 0.08 | ○ | 1.7 | ○ | 77.9 | ○ | ○ |
| 41 | 217 | 226 | ○ | 0.05 | ○ | 1.8 | ○ | 78 | ○ | ○ |
| 42 | 217 | 226 | ○ | 0.04 | ○ | 1.7 | ○ | 77.7 | ○ | ○ |
| 43 | 217 | 239 | Δ | 0.02 | ○ | 1.7 | ○ | 77.6 | ○ | Δ |
| 44 | 217 | 261 | × | 0.02 | ○ | | | | | × |
| 45 | 217 | 276 | × | 0.01 | ○ | | | | | × |
| 46 | 217 | 226 | ○ | 0.05 | ○ | 2.1 | ○ | 78.1 | ○ | ○ |
| 47 | 217 | 226 | ○ | 0.04 | ○ | 2.3 | ○ | 78.2 | ○ | ○ |
| 48 | 217 | 226 | ○ | 0.02 | ○ | 2.5 | ○ | 78.1 | ○ | ○ |
| 49 | 217 | 226 | ○ | 0.02 | ○ | 2.7 | × | 78.4 | ○ | × |
| 50 | 217 | 226 | ○ | 0.01 | ○ | 3 | × | 78.5 | ○ | × |
| 51 | 217 | 242 | × | 0.04 | ○ | 1.8 | ○ | 77.5 | ○ | × |
| 52 | 217 | 242 | × | 0.03 | ○ | 1.8 | ○ | 77.8 | ○ | × |
| 53 | 217 | 242 | × | 0.02 | ○ | 1.8 | ○ | 77 | ○ | × |
| 54 | 217 | 255 | × | 0.01 | ○ | | | | | × |
| 55 | 217 | 277 | × | 0.01 | ○ | | | | | × |
| 56 | 217 | 292 | × | 0.01 | ○ | | | | | × |
| 57 | 217 | 242 | × | 0.04 | ○ | 2.1 | ○ | 78 | ○ | × |
| 58 | 217 | 242 | × | 0.03 | ○ | 2.3 | ○ | 78.2 | ○ | × |
| 59 | 217 | 242 | × | 0.03 | ○ | 2.6 | × | 78.1 | ○ | × |
| 60 | 217 | 242 | × | 0.03 | ○ | 2.9 | × | 77.8 | ○ | × |
| 61 | 217 | 242 | × | 0.03 | ○ | 3.3 | × | 78.2 | ○ | × |

**TABLE 14**

| SAMPLE No. | SOLIDUS TEMP. ( °C ) | LIQUIDUS TEMP.. ( °C ) | | COPPER DISSOLUTION RATE ( µm/sec ) | | VISCOSITY ( cP ) | | SPREADING RATE ( % ) | | TOTAL EVALUATION |
|---|---|---|---|---|---|---|---|---|---|---|
| 62 | 217 | 226 | ○ | 0.24 | × | 1.8 | ○ | 78.1 | ○ | × |
| 63 | 217 | 226 | ○ | 0.16 | Δ | 1.8 | ○ | 77.8 | ○ | Δ |
| 64 | 217 | 226 | ○ | 0.11 | ○ | 1.7 | ○ | 77.7 | ○ | ○ |
| 65 | 217 | 226 | ○ | 0.09 | ○ | 1.7 | ○ | 76.8 | ○ | ○ |
| 66 | 217 | 226 | ○ | 0.05 | ○ | 1.7 | ○ | 77.6 | ○ | ○ |
| 67 | 217 | 226 | ○ | 0.03 | ○ | 1.7 | ○ | 77.6 | ○ | ○ |
| 68 | 217 | 226 | ○ | 0.22 | × | 2.1 | ○ | 78.2 | ○ | × |
| 69 | 217 | 226 | ○ | 0.21 | × | 2.3 | ○ | 78.1 | ○ | × |
| 70 | 217 | 226 | ○ | 0.19 | Δ | 2.6 | × | 78.5 | ○ | × |
| 71 | 217 | 226 | ○ | 0.18 | Δ | 2.8 | × | 77.9 | ○ | × |
| 72 | 217 | 226 | ○ | 0.16 | Δ | 3.2 | × | 78.4 | ○ | × |
| 73 | 217 | 225 | ○ | 0.2 | Δ | 1.7 | ○ | 77 | ○ | Δ |
| 74 | 217 | 225 | ○ | 0.13 | ○ | 1.7 | ○ | 76.8 | ○ | ○ |
| 75 | 217 | 225 | ○ | 0.09 | ○ | 1.7 | ○ | 77.1 | ○ | ○ |
| 76 | 217 | 225 | ○ | 0.06 | ○ | 1.7 | ○ | 77.3 | ○ | ○ |
| 77 | 217 | 225 | ○ | 0.04 | ○ | 1.7 | ○ | 78.1 | ○ | ○ |
| 78 | 217 | 235 | Δ | 0.03 | ○ | 1.8 | ○ | 77.8 | ○ | Δ |
| 79 | 217 | 225 | ○ | 0.19 | Δ | 2.1 | ○ | 77.2 | ○ | Δ |
| 80 | 217 | 225 | ○ | 0.17 | Δ | 2.4 | ○ | 77.2 | ○ | Δ |
| 81 | 217 | 225 | ○ | 0.16 | Δ | 2.6 | × | 77.8 | ○ | × |
| 82 | 217 | 225 | ○ | 0.15 | Δ | 3 | × | 78.2 | ○ | × |
| 83 | 217 | 225 | ○ | 0.13 | ○ | 3.3 | × | 78 | ○ | × |

**TABLE 15**

| SAMPLE NO. | SOLIDUS TEMP. ( °C ) | LIQUIDUS TEMP. ( °C ) | | COPPER DISSOLUTION RATE ( µm/sec ) | | VISCOSITY ( cP ) | | SPREADING RATE ( % ) | | TOTAL EVALUATION |
|---|---|---|---|---|---|---|---|---|---|---|
| 84 | 217 | 224 | ○ | 0.12 | ○ | 1.7 | ○ | 77.8 | ○ | ○ |
| 85 | 217 | 224 | ○ | 0.08 | ○ | 1.7 | ○ | 77.6 | ○ | ○ |
| 86 | 217 | 224 | ○ | 0.06 | ○ | 1.8 | ○ | 78.1 | ○ | ○ |
| 87 | 217 | 237 | Δ | 0.04 | ○ | 1.8 | ○ | 77.4 | ○ | Δ |
| 88 | 217 | 257 | × | 0.02 | ○ | | | | | × |
| 89 | 217 | 272 | × | 0.02 | ○ | | | | | × |
| 90 | 217 | 224 | ○ | 0.11 | ○ | 2.2 | ○ | 77.9 | ○ | ○ |
| 91 | 217 | 224 | ○ | 0.1 | ○ | 2.3 | ○ | 78.5 | ○ | ○ |
| 92 | 217 | 224 | ○ | 0.1 | ○ | 2.5 | ○ | 77.8 | ○ | ○ |
| 93 | 217 | 224 | ○ | 0.09 | ○ | 2.7 | × | 78.3 | ○ | × |
| 94 | 217 | 224 | ○ | 0.08 | ○ | 3 | × | 78.1 | ○ | × |
| 95 | 217 | 236 | Δ | 0.11 | ○ | 1.7 | ○ | 77.5 | ○ | Δ |
| 96 | 217 | 236 | Δ | 0.07 | ○ | 1.7 | ○ | 77.9 | ○ | Δ |
| 97 | 217 | 236 | Δ | 0.05 | ○ | 1.7 | ○ | 78 | ○ | Δ |
| 98 | 217 | 249 | × | 0.03 | ○ | 5.5 | × | 70.8 | ○ | × |
| 99 | 217 | 269 | × | 0.02 | ○ | | | | | × |
| 100 | 217 | 284 | × | 0.01 | ○ | | | | | × |
| 101 | 217 | 236 | Δ | 0.1 | ○ | 2.1 | ○ | 77.8 | ○ | Δ |
| 102 | 217 | 236 | Δ | 0.1 | ○ | 2.3 | ○ | 77.8 | ○ | Δ |
| 103 | 217 | 236 | Δ | 0.09 | ○ | 2.5 | ○ | 77.5 | ○ | Δ |
| 104 | 217 | 236 | Δ | 0.08 | ○ | 2.7 | × | 78.2 | ○ | × |
| 105 | 217 | 236 | Δ | 0.07 | ○ | 3.2 | × | 77.9 | ○ | × |

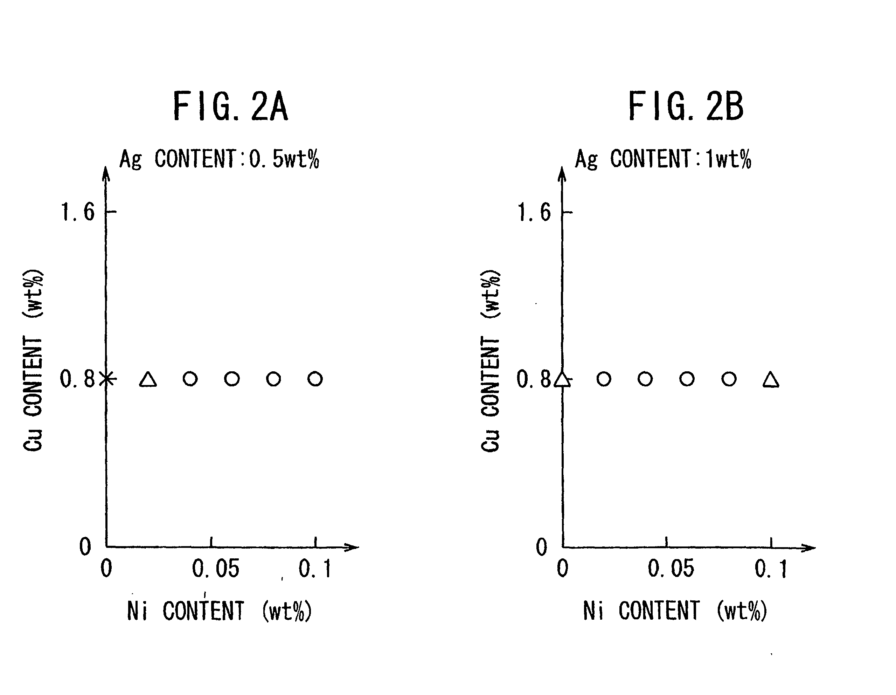

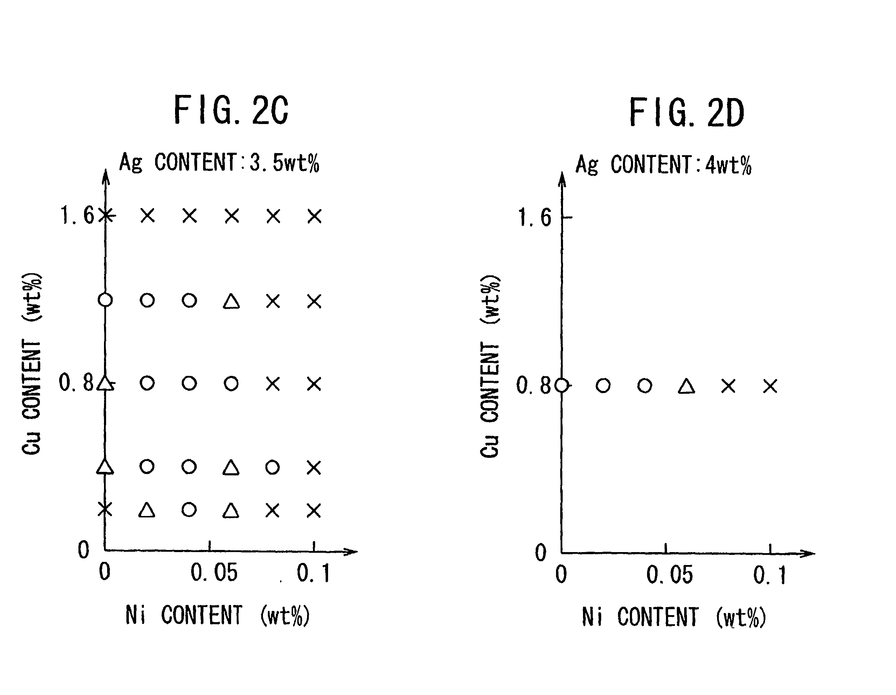

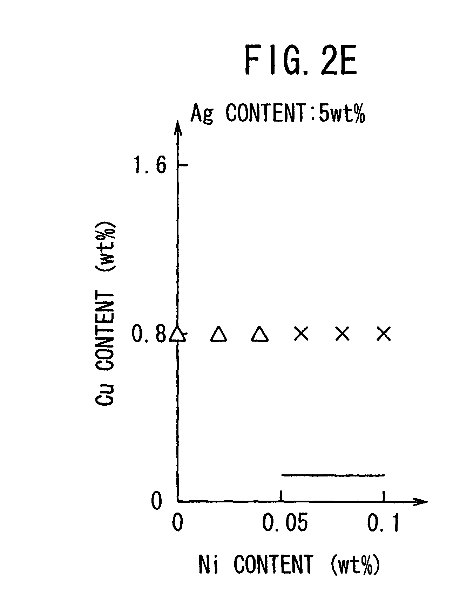

The relationship between the result of the total evaluation of the samples in Tables 11 to 15 and their Ag, Cu, Ni, or Fe content is shown in Figs. 2A to 2E, 3A to 3E, 4A to 4E, and 5A to 5E, respectively.

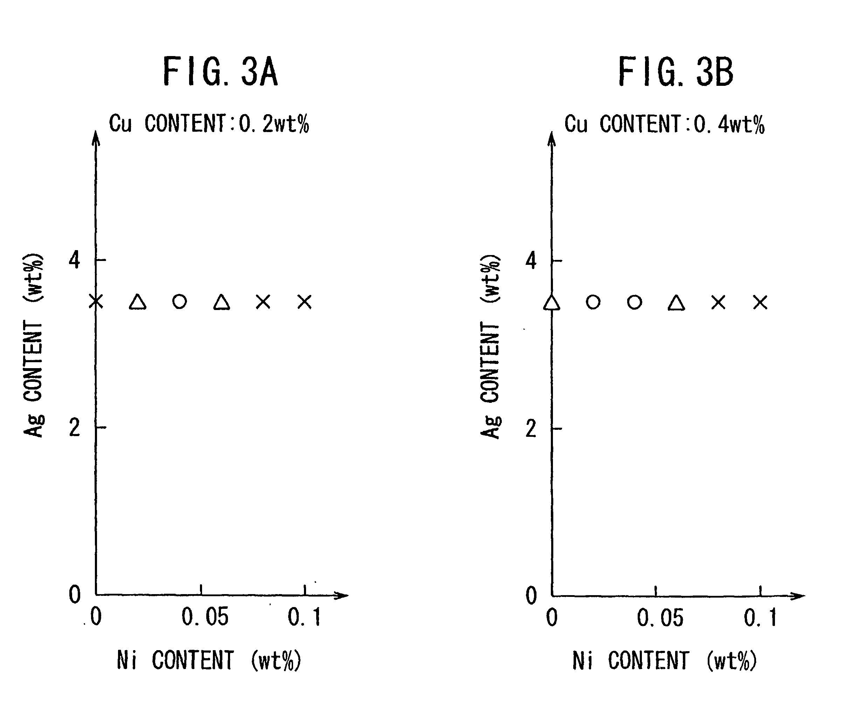

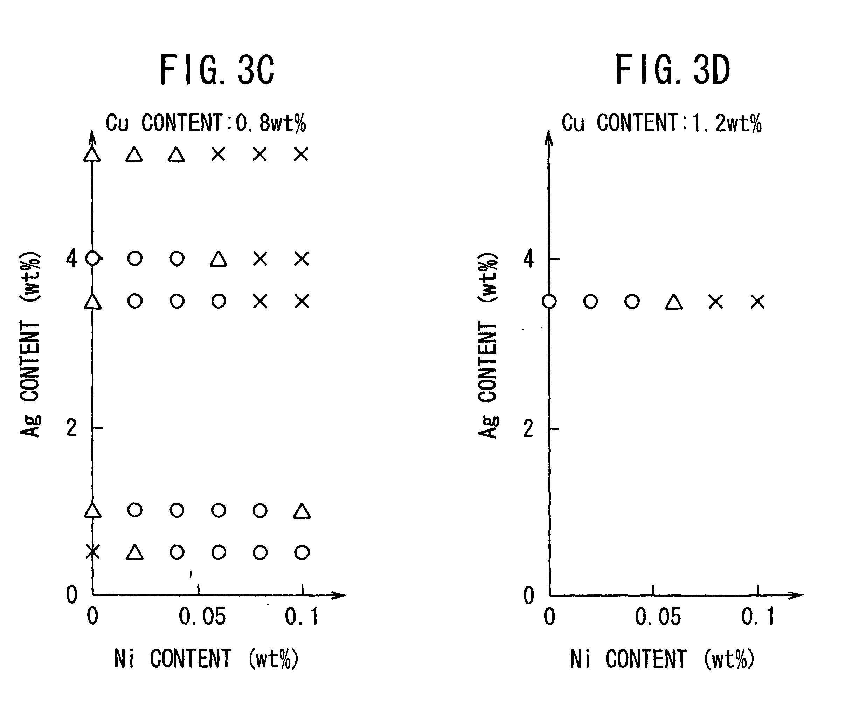

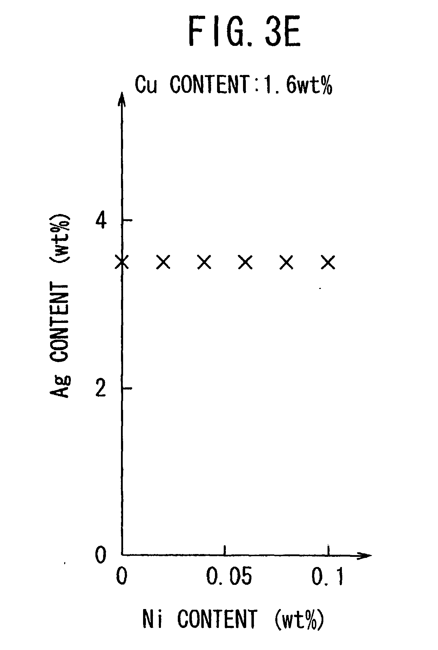

Figs. 2A to 2E and Figs. 3A to 3E show the result of the samples containing Ni only. In this case, it is found that the total evaluation result is "○" or "Δ" for all the corresponding samples when the Cu content is in the range from 0.4 wt% to 1.3 wt% and the Ni content is in the range from 0.02 wt% to 0.06 wt%. The total evaluation result is not changed even if the Ag content varies within the range from 1.0 wt% to 4.0 wt%.

Also, it is found that the total evaluation result is "○" or "Δ" for all the corresponding samples when the Ag content is in the range from 1.0 wt% to 4.0 wt% and the Ni content is in the range from 0.02 wt% to 0.06 wt%. The total evaluation result is not changed even if the Cu content varies within the range from 0.4 wt% to 1.3 wt%.

Moreover, it is found that the total evaluation result is "○" for all the corresponding samples when the Ni content is in the range from 0.02 wt% to 0.06 wt%. The total evaluation result is not changed even if the Ag content varies within the range from 0.4 wt% to 1.3 wt% and the Cu content varies within the range from 0.4 wt% to 1.3 wt%.

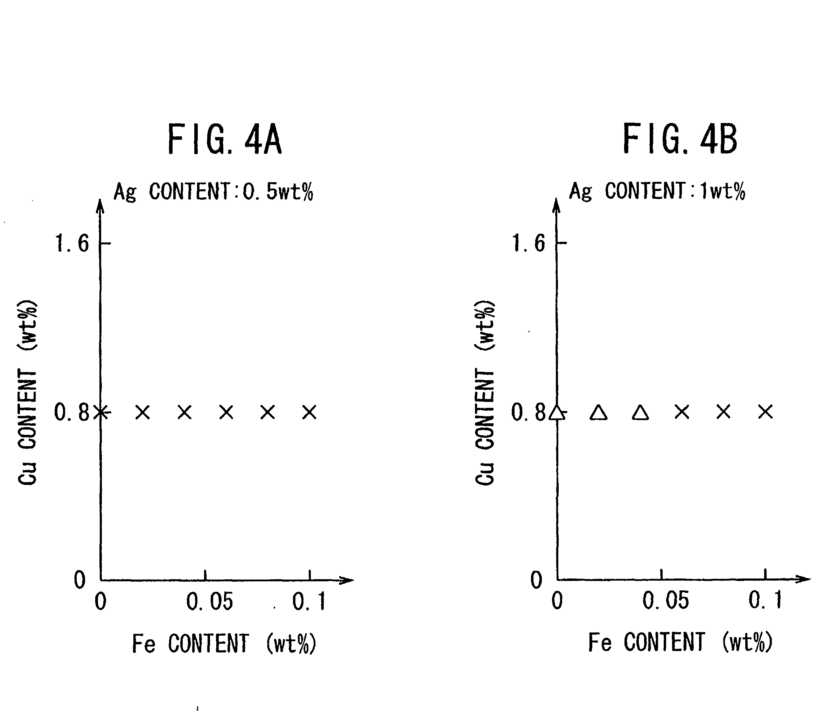

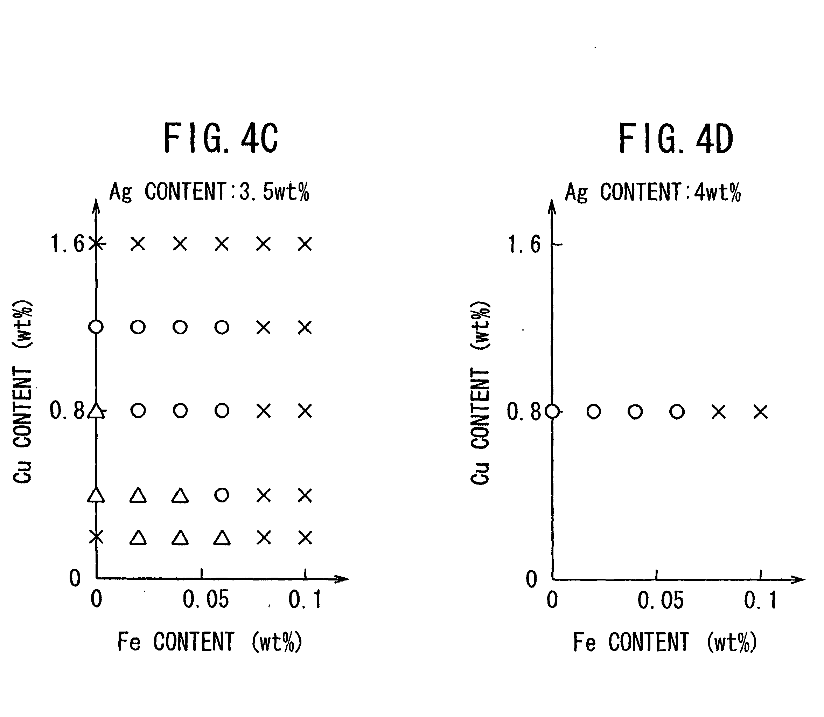

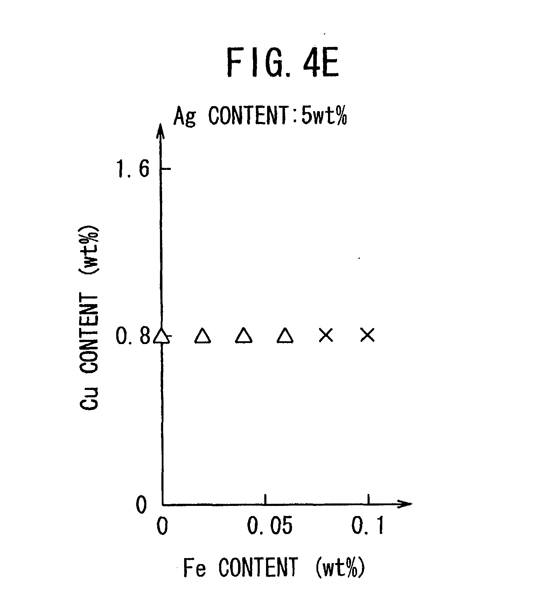

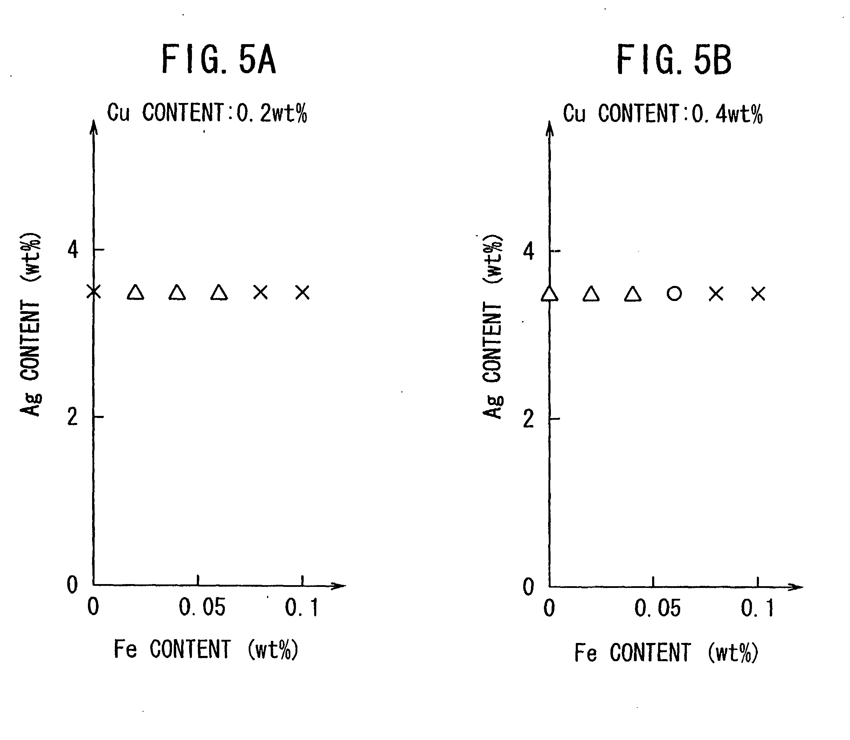

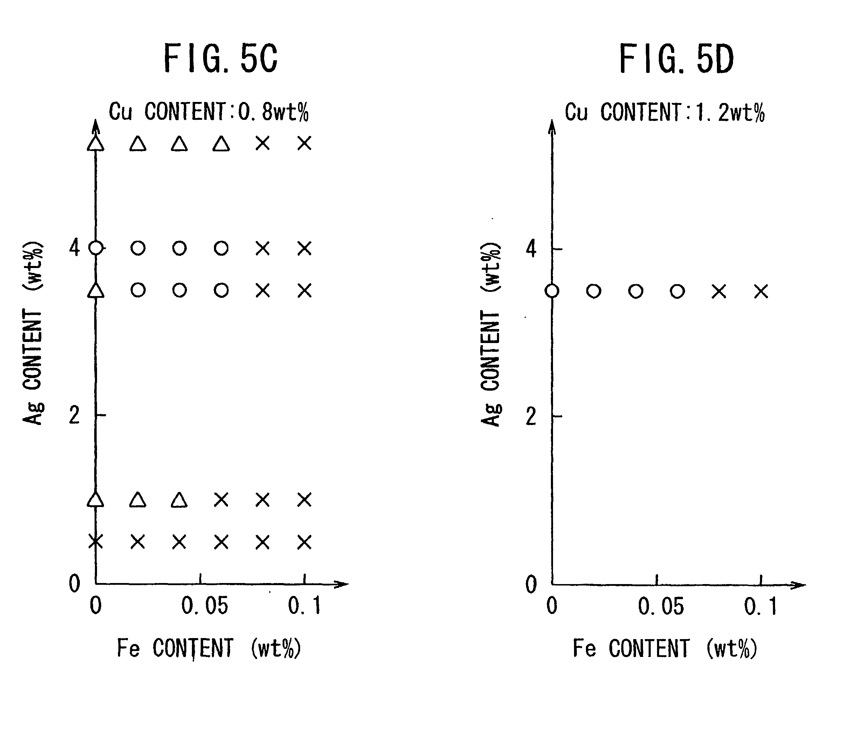

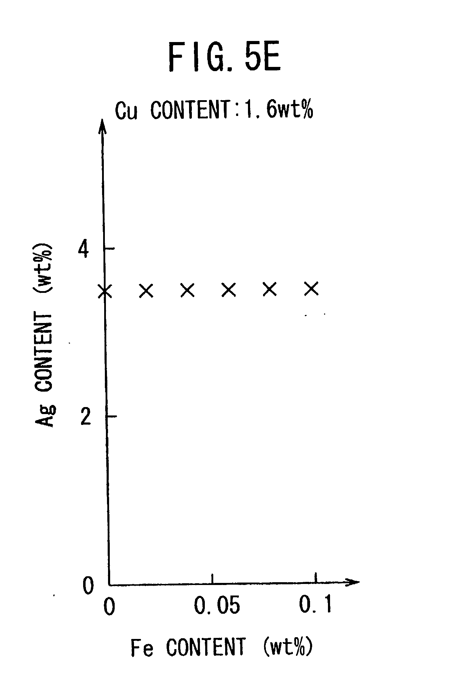

Figs. 4A to 4E and Figs. 5A to 5E show the result of the samples containing Fe only. In this case, it is found that the total evaluation result is "○" or "Δ" for all the corresponding samples when the Cu content is in the range from 0.4 wt% to 1.3 wt% and the Fe content is in the range from 0.02 wt% to 0.06 wt%. The total evaluation result is not changed even if the Ag content varies within the range from 1.0 wt% to 4.0 wt%.

Also, it is found that the total evaluation result is "○" or "Δ" for all the corresponding samples when the Ag content is in the range from 1.0 wt% to 4.0 wt% and the Fe content is in the range from 0.02 wt% to 0.06 wt%. The total evaluation result is not changed even if the Cu content varies within the range from 0.4 wt% to 1.3 wt%.

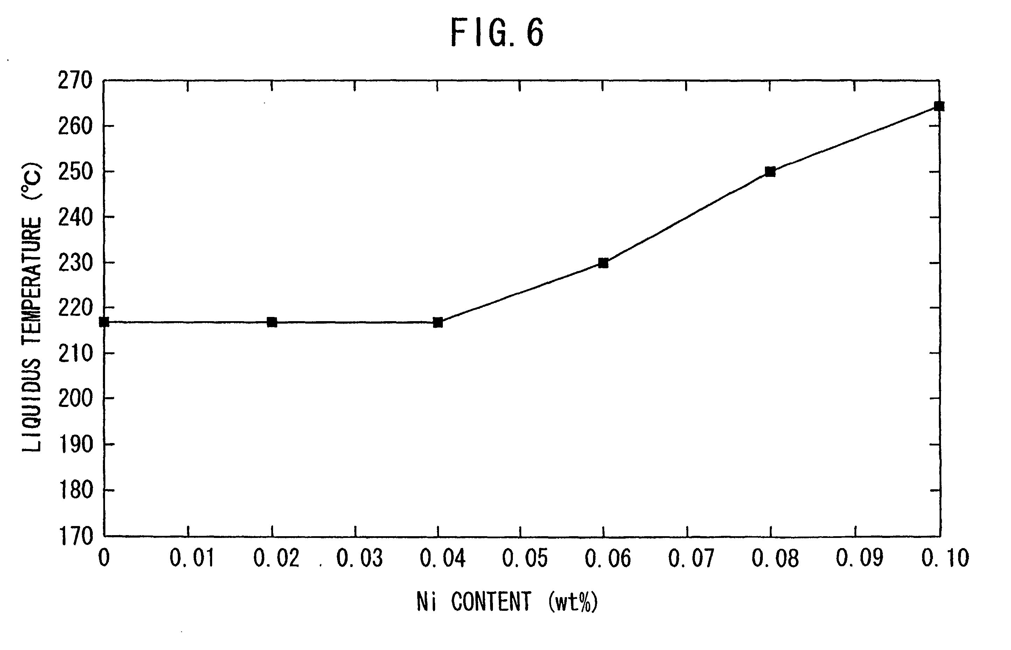

Subsequently, to clarify the effect by adding Ni and/or Fe to a popular Sn-Ag-Cu solder that contains 3.5 wt% of Ag and 0.8 wt% of Cu, Figs. 6 to 12 are presented on the basis of the results shown in Tables 11 to 15.

Fig. 6 shows the relationship between the liquidus temperature and the Ni content of the Sn-Ag-Cu solder that contains 3.5 wt% of Ag and 0.8 wt% of Cu. It is seen from Fig. 6 that the liquidus temperature is equal to or lower than 230 °C when the Ni content is 0.06 wt% or less.

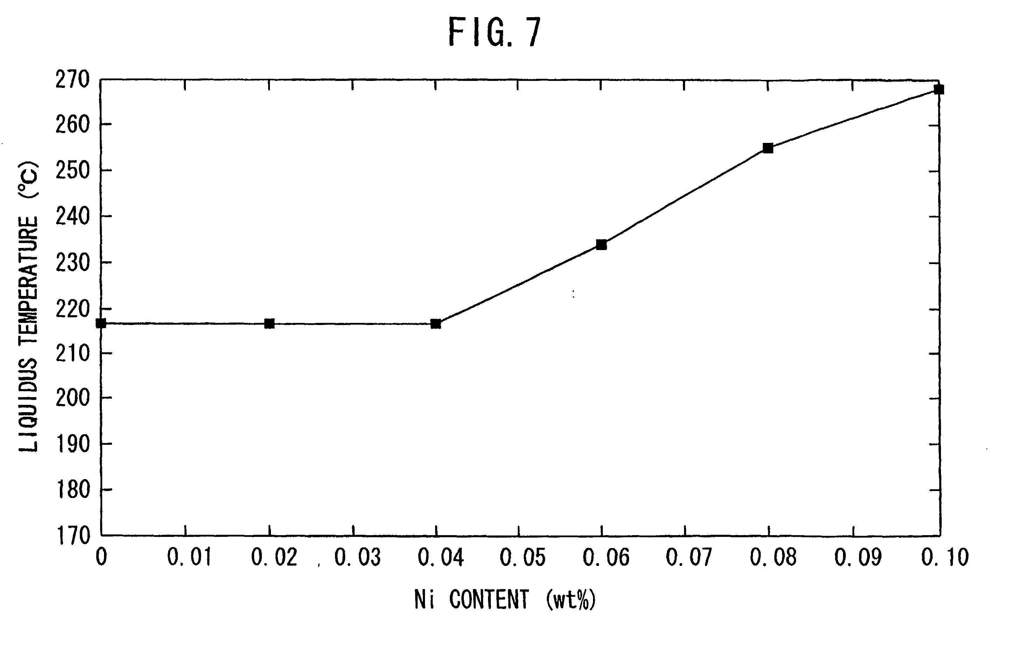

Fig. 7 shows the relationship between the liquidus temperature and the Ni content of the Sn-Ag-Cu solder that contains 3.5 wt% of Ag, 0.8 wt% of Cu, and 0.02 wt% of Fe. It is seen from Fig. 7 that the liquidus temperature is equal to or lower than 240 °C when the Ni content is 0.06 wt% or less and equal to or lower than 230 °C when the Ni content is 0.04 wt% or less.

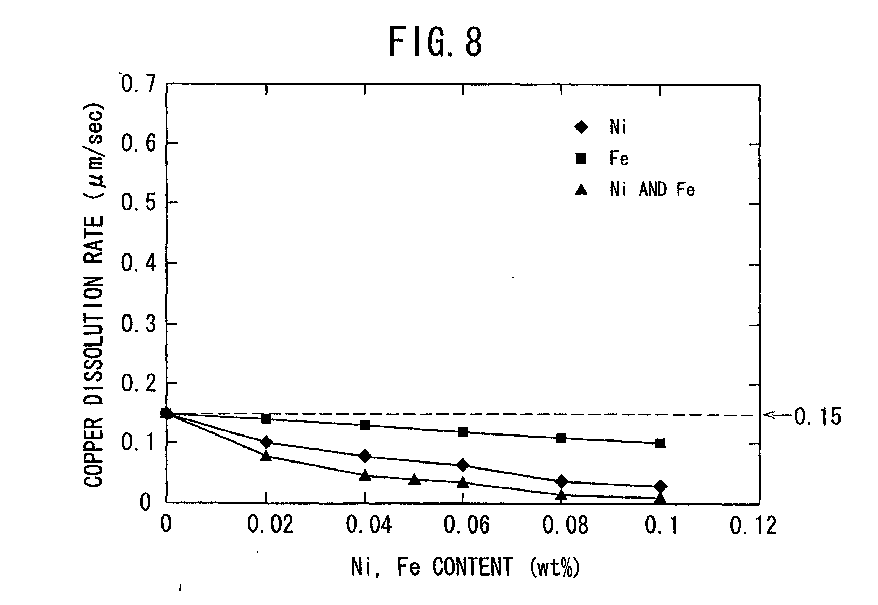

Fig. 8 shows the relationship between the copper dissolution rate and the Ni and/or Fe content(s) of the Sn-Ag-Cu solder that contains 3.5 wt% of Ag and 0.8 wt% of Cu. In Fig. 8, the symbol "◆" denotes the case of only Ni being added, the symbol "■" denotes the case of only Ni being added, and the symbol "▲" denotes the case of both Ni and Fe being added in which the Ni content was changed while the Fe content was fixed at 0.02 wt%. It is seen from Fig. 8 that the copper dissolution rate is lower than 0.15 µm/sec in these three cases when the Ni and/or Fe content(s) is/are 0.02 wt% or greater.

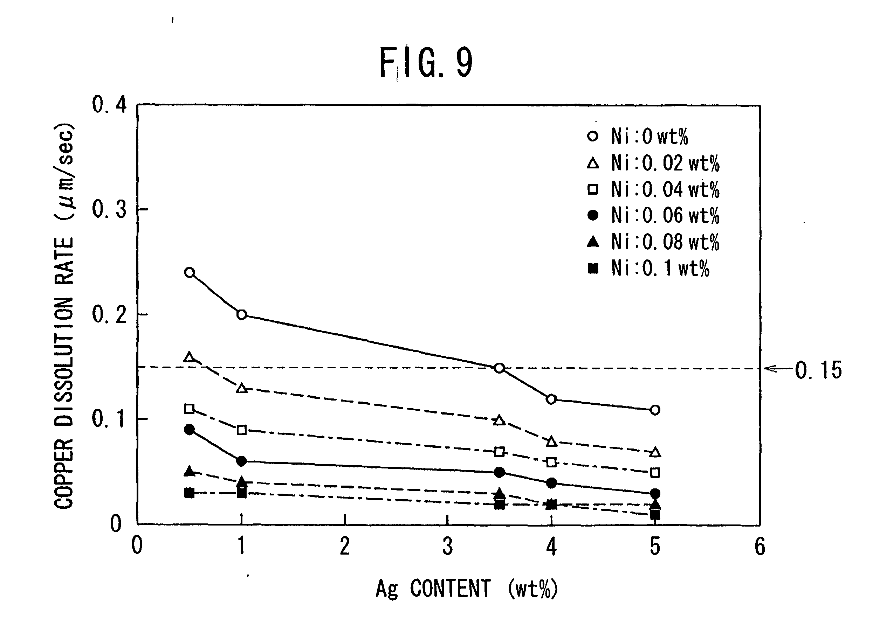

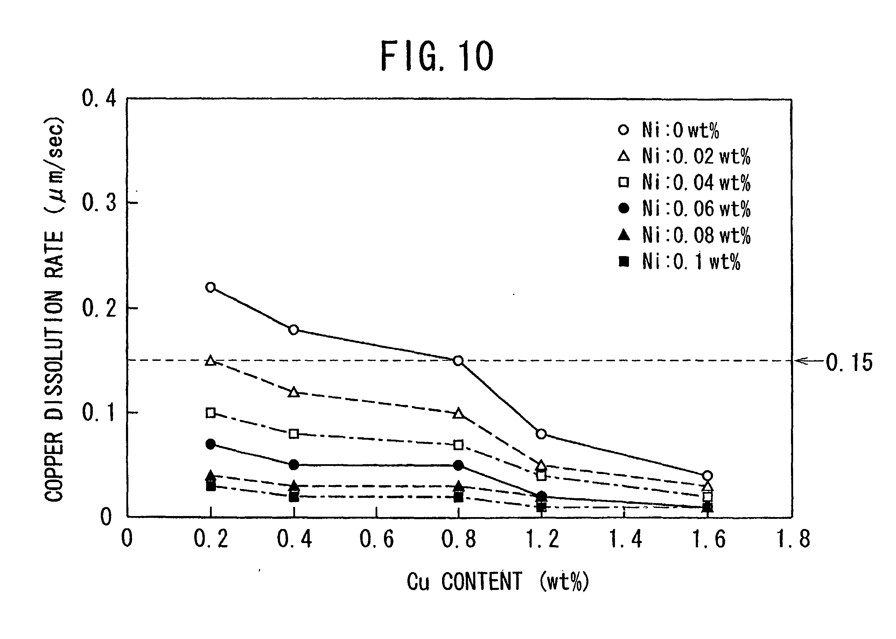

Fig. 9 shows the relationship between the copper dissolution rate and the Ag content of the Sn-Ag-Cu solder when the Ni content is changed from 0 to 0.1 wt% and the Cu content is fixed at 0.8 wt%. Fig. 10 shows the relationship between the copper dissolution rate and the Cu content of the Sn-Ag-Cu solder when the Ni content is changed from 0 to 0.1 wt% and the Ag content is fixed at 3.5 wt%. It is seen from Figs. 9 and 10 that the copper dissolution rate is lower than 0.15 µm/sec when the Ni content is in the range from 0.02 wt% to 0.06 wt% while the Ag content is in the range from 1 wt% to 4 wt% and the Cu content is in the range from 0.4 wt% to 1.3 wt%.

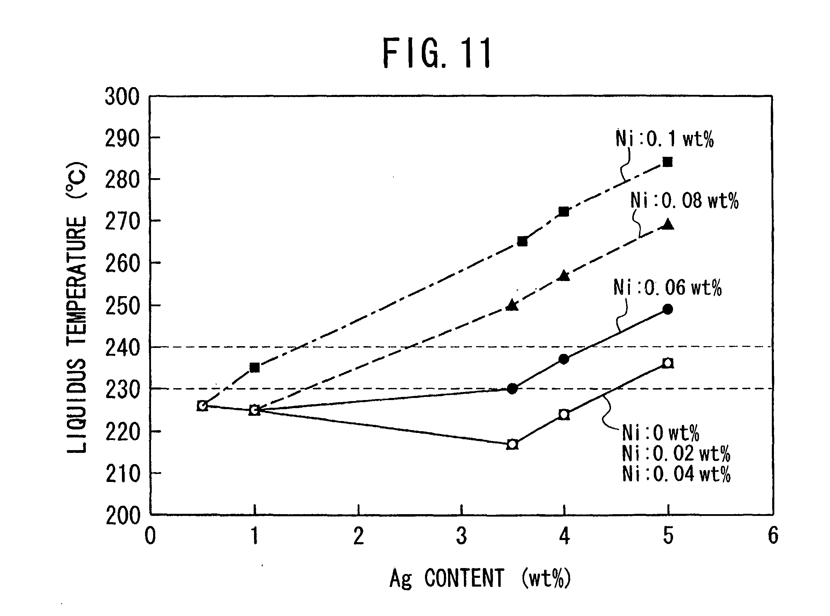

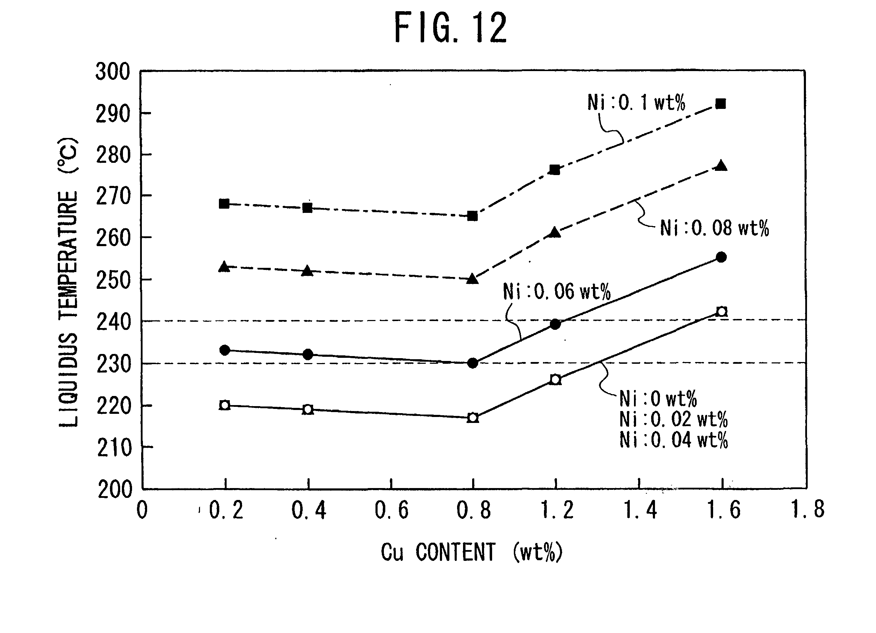

Fig. 11 shows the relationship between the liquidus temperature and the Ag content of the Sn-Ag-Cu solder when the Ni content is changed from 0 to 0.1 wt% and the Cu content is fixed at 0.8 wt%. Fig. 12 shows the relationship between the liquidus temperature and the Cu content of the Sn-Ag-Cu solder when the Ni content is changed from 0 to 0.1 wt% and the Ag content is fixed at 3.5 wt%. It is seen from Figs. 11 and 12 that the liquidus temperature is equal to or lower than 240 °C when the Ni content is in the range from 0.02 wt% to 0.06 wt% while the Ag content is in the range from 1 wt% to 4 wt% and the Cu content is in the range from 0.4 wt% to 1.2 wt%. It is also seen that the liquidus temperature is equal to or lower than 230 °C if the Ni content is changed in the range from 0.02 wt% to 0.04 wt%.

## Claims

1. A lead-free solder consisting of:
(a) 1.0 to 4.0 wt% of Ag;
(b) 0.4 to 1.3 wt% of Cu;
(c) 0.02 to 0.06 wt% of Ni;
(d) optionally 0.02 to 0.06 wt. of Fe; and
(e) a balance of Sn and unavoidable impurities;
wherein said Ni serves to lower a copper dissolution rate of said solder.

2. The solder according to claim 1, wherein a content of Ni is in a range from 0.02 to 0.04 wt%.

3. The solder according to claim 1, wherein said solder having a copper dissolution rate of 0.20 µm/sec or less.

4. The solder according to claim 1, wherein said solder having a liquidus temperature of 240°C or lower.

5. The solder according to claim 1, wherein said solder having a liquidus temperature of 230°C or lower.

6. The solder according to claim 1, wherein said solder has a viscosity of 2.5 cP or lower.

7. The solder according to claim 1, further containing 0.02 to 0.06. wt% of Fe.

8. The solder according to claim 1, further containing 0.02 to 0.05 wt% of Fe.

9. A lead-free solder consisting of:
(a) 1.0 to 4.0 wt% of Ag;
(b) 0.4 to 1.3 wt% of Cu;
(c) 0.02 to 0.06 wt% of Fe; and
(d) a balance of Sn and unavoidable impurities;
wherein said Fe serves to lower a copper dissolution rate of said solder.

10. The solder according to claim 9, wherein a content of Fe is in a range from 0.02 to 0.05 wt%.

11. The solder according to claim 9, wherein said solder having a copper dissolution rate of 0.20 µm/sec or less.

12. The solder according to claim 9, wherein said solder having a liquidus temperature of 240°C or lower.

13. The solder according to claim 9, wherein said solder having a liquidus temperature of 230°C or lower.

14. The solder according to claim 9, wherein said solder has a viscosity of 2.5 cP or lower.

15. A method of surface-treating a printed wiring board, comprising the steps of:
(a) preparing said solder according to claim 1, 7 or 9; and
(b) selectively coating said solder on a Cu circuit layer of a printed wiring board.

16. A method of mounting electronic parts on a printed wiring board, comprising the steps of:
(a) preparing said solder according to claim 1, 7 or 9; and
(b) soldering electronic parts on a Cu circuit layer of a printed wiring board with said solder.

## Patentansprüche

1. Bleifreies Lötmittel, bestehend aus:
(a) 1,0 bis 4,0 Gew.-% Ag;
(b) 0,4 bis 1,3 Gew.-% Cu;
(c) 0,02 bis 0,06 Gew.-% Ni;
(d) gegebenenfalls 0,02 bis 0,06 Gew.-% Fe; und
(e) einem Rest aus Sn und unvermeidbaren Verunreinigungen;
worin das Ni dazu dient, eine Kupfer-Auflösungsgeschwindigkeit des Lötmittels zu erniedrigen.

2. Lötmittel nach Anspruch 1, bei dem der Gehalt an Ni im Bereich von 0,02 bis 0,04 Gew.-% liegt.

3. Lötmittel nach Anspruch 1, bei dem das Lötmittel eine Kupfer-Auflösungsgeschwindigkeit von 0,20 µm/s oder weniger aufweist.

4. Lötmittel nach Anspruch 1, bei dem das Lötmittel einen Liquiduspunkt von 240°C oder niedriger aufweist.

5. Lötmittel nach Anspruch 1, bei dem das Lötmittel einen Liquiduspunkt von 230°C oder niedriger aufweist.

6. Lötmittel nach Anspruch 1, bei dem das Lötmittel eine Viskosität von 2,5 cP oder niedriger aufweist.

7. Lötmittel nach Anspruch 1, weiter enthaltend 0,02 bis 0,06 Gew.-% Fe.

8. Lötmittel nach Anspruch 1, weiter enthaltend 0,02 bis 0,05 Gew.-% Fe.

9. Bleifreies Lötmittel, bestehend aus:
(a) 1,0 bis 4,0 Gew.-% Ag;
(b) 0,4 bis 1,3 Gew.-% Cu;
(c) 0,02 bis 0,06 Gew.-% Fe; und
(d) einem Rest aus Sn und unvermeidbaren Verunreinigungen;
wobei das Eisen dazu dient, eine Kupfer-Auflösungsgeschwindigkeit des Lötmittels zu erniedrigen.

10. Lötmittel nach Anspruch 9, in dem der Gehalt an Fe im Bereich von 0,02 bis 0,05 Gew.-% liegt.

11. Lötmittel nach Anspruch 9, bei dem das Lötmittel eine Kupfer-Auflösungsgeschwindigkeit von 0,20 µm/s oder weniger aufweist.

12. Lötmittel nach Anspruch 9, bei dem das Lötmittel einen Liquiduspunkt von 240°C oder niedriger aufweist.

13. Lötmittel nach Anspruch 9, bei dem das Lötmittel einen Liquiduspunkt von 230°C oder niedriger aufweist.

14. Lötmittel nach Anspruch 9, bei dem das Lötmittel eine Viskosität von 2,5 cP oder niedriger aufweist.

15. Verfahren zur Oberflächenbehandlung einer gedruckten Leiterplatte, umfassend die Schritte:
(a) Herstellen des Lötmittels nach Anspruch 1, 7 oder 9; und
(b) selektives Auftragen des Lötmittels auf eine Cu-Stromkreisschicht einer gedruckten Leiterplatte.

16. Verfahren zur Befestigung von elektronischen Teilen auf einer gedruckten Leiterplatte, umfassend die Schritte:
(a) Herstellen des Lötmittels nach Anspruch 1, 7 oder 9; und
(b) Löten der elektronischen Teile auf eine Cu-Stromkreisschicht einer gedruckten Leiterplatte mit dem Lötmittel.

## Revendications

1. Brasure sans plomb consistant en :
(a) 1,0 à 4,0 % en poids de Ag ;
(b) 0,4 à 1,3 % en poids de Cu ;
(c) 0,02 à 0,06 % en poids de Ni ;
(d) facultativement 0,02 à 0,06 % en poids de Fe ;
(e) le reste de Sn et d'impuretés inévitables ;
dans laquelle le Ni sert à abaisser une vitesse de dissolution du cuivre de ladite brasure.

2. Brasure selon la revendication 1, dans laquelle une teneur en Ni est dans une gamme de 0,02 à 0,04 % en poids.

3. Brasure selon la revendication 1, dans laquelle ladite brasure a une vitesse de dissolution de cuivre de 0,20 µm/s ou moins.

4. Brasure selon la revendication 1, dans laquelle ladite brasure a une température de liquidus de 240°C ou inférieure.

5. Brasure selon la revendication 1, dans laquelle ladite brasure a une température de liquidus de 230°C ou inférieure.

6. Brasure selon la revendication 1, dans laquelle ladite brasure a une viscosité de 2,5 cP ou inférieure.

7. Brasure selon la revendication 1, contenant en outre 0,02 à 0,06 % en poids de Fe.

8. Brasure selon la revendication 1, contenant en outre 0,02 à 0,05 % en poids de Fe.

9. Brasure sans plomb consistant en :
(a) 1,0 à 4,0 % en poids de Ag ;
(b) 0,4 à 1,3 % en poids de Cu ;
(c) 0,02 à 0,06 % en poids de Fe ; et
(d) le reste de Sn et d'impuretés inévitables ;
dans laquelle ledit Fe sert à abaisser une vitesse de dissolution du cuivre de ladite brasure.

10. Brasure selon la revendication 9, dans laquelle une teneur en Fe est dans une gamme de 0,02 à 0,05 % en poids.

11. Brasure selon la revendication 9, dans laquelle ladite brasure a une vitesse de dissolution du cuivre de 0,20 µm/s ou moins.

12. Brasure selon la revendication 9, dans laquelle ladite brasure a une température de liquidus de 240°C ou inférieure.

13. Brasure selon la revendication selon la revendication 9, dans laquelle ladite brasure a une température de liquidus de 230°C ou inférieure.

14. Brasure selon la revendication 9, dans laquelle ladite brasure a une viscosité de 2,5 cP ou inférieure.

15. Procédé de traitement de surface d'une carte de câblage imprimé, comprenant les étapes consistant à :
(a) préparer ladite brasure selon la revendication 1, 7 ou 9 ; et
(b) revêtir sélectivement ladite brasure sur une couche de circuit en Cu d'une carte de câblage imprimé.

16. Procédé de montage de parties électroniques sur une carte de câblage imprimé comprenant les étapes consistant à :
(a) préparer ladite brasure selon la revendication 1, 7 ou 9 ; et
(b) braser les parties électroniques sur une couche de circuit en Cu d'une carte de câblage imprimé avec ladite brasure.
